# EUROPEAN PATENT APPLICATION

(11) **EP 4 606 550 A1**
(43) Date of publication of application: **27.08.2025**
(21) Application number: 23879394.7
(22) Date of filing: 22.06.2023
(51) Int. Cl.: B29C 45/76, G06Q 50/04, B29C 48/92, G06Q 10/20

(54) **INFORMATION PROCESSING METHOD, INFORMATION PROCESSING DEVICE, AND COMPUTER PROGRAM**

(30) Priority: 17.10.2022 JP 2022166436
(71) Applicant: The Japan Steel Works, Ltd., Tokyo 141-0032 (JP)
(72) Inventor: SUZUKI, Jun, Tokyo 141-0032 (JP); OKIMOTO, Tasuku, Tokyo 141-0032 (JP); FUROKAWA, Mikio, Tokyo 141-0032 (JP)
(74) Representative: Simmons & Simmons LLP (Munich)
(86) International application number: PCT/JP2023/023103
(87) International publication number: WO 2024/084740

(57) **Abstract**

The present invention stores usage registration information that indicates usage/non-usage of a maintenance management service that secures spares for the members of molding machines before the members are damaged at a storage unit in association with identifiers for users of the molding machines, acquires physical quantity data that relates to the state of the members of the molding machines, estimates the remaining life or degree of abnormality of the members on the basis of the acquired physical quantity data, determines the need to secure spares for members no later than before prescribed periods of time that correspond to the members on the basis of the estimated remaining life or degree of abnormality of the members, and, when it has been determined that there is a need to secure a spare for a member, executes processing that pertains to securing spares for members that need to be replaced in accordance with the usage registration information stored at the storage unit.

## Description

### Technical Field

The present invention relates to an information processing method, an information processing apparatus and a computer program.

### Background Art

Patent Literature 1 discloses a life prediction device that predicts a remaining life of a rotating member in an injection molding machine or the like. The life prediction device of Patent Literature 1 accumulates the number of rotations of the rotating member rotated by a drive motor and calculates a fatigue life of the rotating member from the accumulated numbers of rotations and the torque required to rotate the rotating member.

Patent Literature 2 discloses an abnormality detection device provided with a vibration sensor for detecting vibrations of a ball screw installed in an injection molding machine, that detects an abnormality of the ball screw by analyzing the vibration intensity detected by the vibration sensor.

### Citation List

### Patent Literature

Patent Literature 1: Japanese Patent Application Laid-Open Publication No. H6-91683
Patent Literature 2: Japanese Patent Application Laid-Open Publication No. 2021-74917

### Summary of Invention

### Technical Problems

For some components constituting a molding machine such as an injection molding machine, an extruder or the like, it takes considerable time to secure the replacements. Even if the remaining life of such components can be predicted, the work required for replacement of the components needs to be taken into account to prepare new components before the components are damaged, otherwise the molding machine would be inoperable.

An object of the present disclosure is to provide an information processing method, an information processing apparatus and a computer program that are capable of estimating a remaining life or an abnormality degree of a component constituting a molding machine and securing a spare part in advance before the molding machine is made inoperable due to breakage of the component.

### Solution to Problems

An information processing method according to one aspect of the present disclosure comprises: storing, in a storage unit, use registration information indicating whether or not to use a maintenance and management service for securing in advance a spare part of a component constituting a molding machine before the component is damaged, in association with an identifier of a user of the molding machine; acquiring physical quantity data related to a condition of the component constituting the molding machine; estimating a remaining life or an abnormality degree of the component based on the acquired physical quantity data; determining whether or not a spare part for the component needs to be secured before a predetermined time period required for securing a spare part of the component at the latest based on the estimated remaining life or abnormality degree of the component; and executing, in a case where it is determined that a spare part for the component needs to be secured, processing of securing a spare part of the component that needs to be replaced according to the use registration information stored in the storage unit.

An information processing apparatus according to one aspect of the present disclosure, comprises: an acquisition unit that acquires physical quantity data related to a condition of a component constituting a molding machine; and a storage unit that stores use registration information indicating whether or not to use a maintenance and management service for securing in advance a spare part for the component constituting the molding machine before the component is damaged, in association with an identifier of a user of the molding machine; and a processing unit, the processing unit estimating a remaining life or an abnormality degree of the component based on the acquired physical quantity data; determining whether or not a spare part for the component needs to be secured before a predetermined time period required for securing a spare part of the component at the latest based on the estimated remaining life or abnormality degree of the component; and executing, in a case where it is determined that a spare part for the component needs to be secured, processing of securing a spare part of the component that needs to be replaced according to the use registration information stored in the storage unit.

A computer program according to one aspect of the present disclosure causes a computer to execute processing of: storing, in a storage unit, use registration information indicating whether or not to use a maintenance and management service for securing in advance a spare part of a component constituting a molding machine before the component is damaged, in association with an identifier of a user of the molding machine; acquiring physical quantity data related to a condition of the component constituting the molding machine; estimating a remaining life or an abnormality degree of the component based on the acquired physical quantity data; determining whether or not a spare part for the component needs to be secured before a predetermined time period required for securing a spare part of the component at the latest based on the estimated remaining life or abnormality degree of the component; and executing, in a case where it is determined that a spare part for the component needs to be secured, processing of securing a spare part of the component that needs to be replaced according to the use registration information stored in the storage unit.

### Advantageous Effects of Invention

According to the present disclosure, it is possible to estimate a remaining life or an abnormality degree of a component constituting a molding machine and to secure a spare part for the component in advance before the molding machine becomes inoperable due to breakage of the component.

### Brief Description of Drawings

FIG. 1 is a block diagram depicting an example of the configuration of a molding machine system according to Embodiment 1.
FIG. 2 is a schematic view depicting an example of the configuration of the molding machine according to Embodiment 1.
FIG. 3 is a block diagram depicting an example of the configuration of a data collection device according to Embodiment 1.
FIG. 4 is a block diagram depicting an example of the configuration of an information processing apparatus according to Embodiment 1.
FIG. 5 is a conceptual diagram depicting an example of a record layout of a collection data DB.
FIG. 6 is a conceptual diagram depicting an example of a record layout of a user DB.
FIG. 7 is a conceptual diagram depicting an example of a record layout of a user machine DB.
FIG. 8 is a conceptual diagram depicting an example of a record layout of a report DB.
FIG. 9 is a block diagram depicting an estimation processing unit that predicts a remaining life or an abnormality degree of a component.
FIG. 10 is a flowchart depicting a processing procedure for the information processing apparatus.
FIG. 11 is a flowchart depicting a processing procedure for the information processing apparatus.
FIG. 12 is a flowchart depicting a processing procedure for the information processing apparatus.
FIG. 13 is a graph depicting cost-effectiveness of maintenance management according to Embodiment 1.
FIG. 14 is a block diagram depicting an estimation processing unit according to Embodiment 2.
FIG. 15 is a conceptual diagram depicting an example of a record layout of a user machine DB according to Embodiment 3.

### Description of Embodiments

An information processing method, an information processing apparatus and a computer program according to embodiments of the present disclosure will be described below with reference to the drawings. It should be noted that the present disclosure is not limited to these examples, but is indicated by the scope of the claims and is intended to include all modifications within the meaning and scope equivalent to the scope of claims. Furthermore, at least part of the following embodiments may arbitrarily be combined.

### Embodiment 1

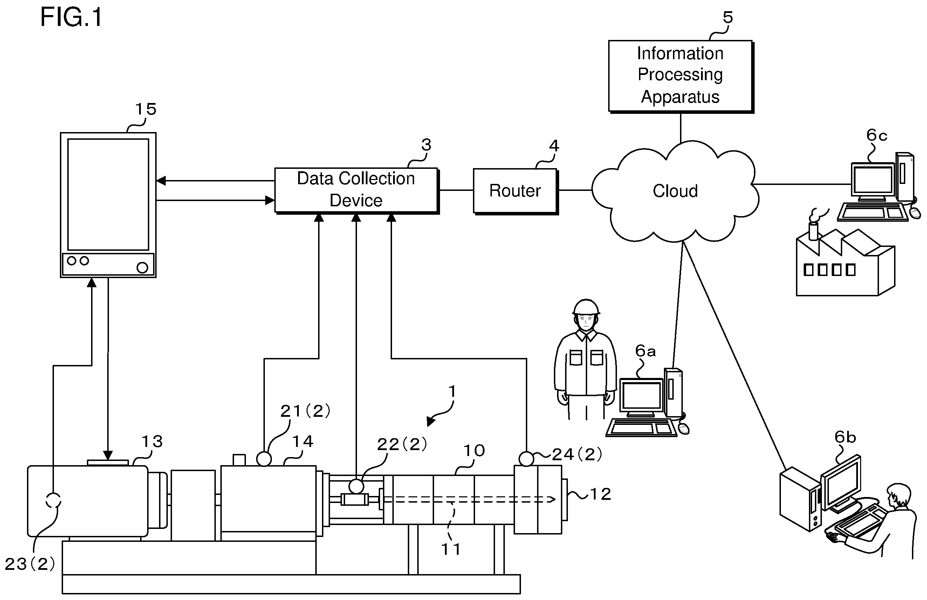

FIG. 1 is a block diagram depicting an example of the configuration of a molding machine system according to Embodiment 1. The molding machine system is provided with a molding machine 1, multiple sensors 2, a data collection device 3, a router 4, an information processing apparatus 5 and terminal devices 6a, 6b, 6c. The molding machine 1 includes an injection molding machine and an extruder. The molding machine 1 is described below as an extruder by way of example.

While one molding machine 1 and one data collection device 3 are illustrated in FIG. 1, the information processing apparatus 5 is connected to multiple data collection devices 3 (not illustrated) through a network. The data collection device 3 is connected to one or more molding machines 1. The information processing apparatus 5 can collect information on the multiple molding machines 1 and estimate a remaining life or an abnormality degree of one or more components constituting each of the molding machines 1. The multiple molding machines 1 and the data collection device 3 are assumed to be installed in each of the factories of multiple users who possess the molding machines 1. The user is a staff member, an employee of an organization such as a cooperation or the like that possesses the molding machines 1. Hereinafter, the staff member or the employee is simply referred to as the user.

The terminal devices 6a, 6b are each a communication terminal with a display portion, such as a computer, a tablet terminal and a smartphone. The terminal device 6a is a terminal to be used by the user. The terminal device 6b is a terminal to be used by a service representative such as a sales representative or a maintenance manager who is associated with the molding machine 1 of the user. The terminal device 6c is a terminal to be used by a person in charge of a factory where a component constituting the molding machine 1 is manufactured.

The person in charge of providing service will be hereafter simply referred to as a sales representative. Moreover, a company, which is on the side of the sales representative, that offers maintenance and management services for the components constituting the molding machine 1 to the user and that manufactures and sells the components will be referred to as a maintenance and management company.

### <Background>

The molding machine system according to Embodiment 1 is for optimizing the maintenance management of components of the molding machine 1. The components constituting the molding machine 1 include mass-produced general-purpose products and custom-made products varying depending on the user and the molding machine 1. Among the custom-made products, some products require time from placement of an order to manufacture while other products do not require so much time. Embodiment 1 is particularly effective for the maintenance management of components that are custom-made products and require time for manufacture. A reduction gear 14 of the molding machine is an example of such a custom-made product. The specifications of the reduction gear 14 vary depending on the user and the molding machine 1, and it may take several months to manufacture the reduction gear 14. The operational downtime of the molding machine 1 caused by breakage of the reduction gear 14 is a major risk.

For this reason, users usually perform maintenance management such as overhauls of the reduction gears 14 at regular intervals of several years, for example. Though overhauls at intervals of several years minimize the risk of operational downtime, this interval is not necessarily an optimal overhaul period depending on the operating situation and operating environment of the molding machine 1. The overhaul interval set longer may however cause substantial loss due to operational downtime of the molding machine 1 once breakage of the reduction gear 14 occurs.

Though it is conceivable for the maintenance management company to have prepared spare parts for the reduction gear 14 in stock, having prepared custom-made products varying for different users is at risk for the maintenance management company. If the time from the preparation of spare parts to the actual replacement of parts is long, the cost for storage and condition management of components piles up. In addition, if the molding machine 1 is no longer in use without parts being replaced, or if a product made of another company is adopted, the spare parts will be discarded.

The molding machine system according to Embodiment 1 estimates a remaining life or an abnormality degree of a component of the molding machine 1 and presents it to the user and the sales representative to thereby facilitate prediction of the timing of replacement of the components. The molding machine system further enables the maintenance and management company to start securing spare parts (new parts) at an optimal timing prior to breakage of a component such as the reduction gear 14 or the like.

In the case where the molding machine system according to Embodiment 1 is employed, the maintenance and management company starts manufacturing a custom-made product before a component of the molding machine 1 is damaged and thus bears a certain risk. Therefore, in Embodiment 1, the following service form is assumed.

The maintenance and management company provides a service of estimating a remaining life or an abnormality degree of a component constituting the molding machine 1 and reporting the condition of the molding machine 1 and the component to the user. The maintenance and management company further predicts the replacement timing of a component constituting the molding machine 1, manufactures spare parts thereof in advance, and provides the spare parts for the component immediately before or when the component is damaged. These services allow the user to replace components in the molding machine 1 at an optimal timing and avoid the risk of operational downtime of the molding machine 1.

For the aforementioned services, the user pays the maintenance management company a certain amount of warranty fees regularly, for example, monthly. When replacing components, the user pays the maintenance management company a replacement cost. The replacement cost varies depending on the operating situation and the operating environment of the molding machine 1, the frequency of failure of the component or the like. This is because the risks borne by the maintenance management company vary depending on these different factors.

### <Molding Machine 1>

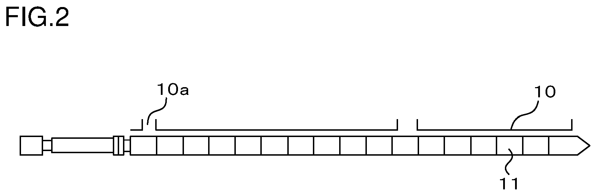

FIG. 2 is a schematic view depicting an example of the configuration of the molding machine 1 according to Embodiment 1. The molding machine 1 is provided with a cylinder 10 with a hopper 10a through which a resin raw material is input, two screws 11 and a die 12 (see FIG. 1) that is disposed at the outlet of the cylinder 10. The two screws 11 are arranged substantially parallel with each other in mesh and are rotatably inserted into a hole of the cylinder 10. The two screws 11 carry the resin raw material input into the hopper 10a in the direction of extrusion (to the right in FIG. 1 and FIG. 2), and melt and knead the resin raw material. The molten resin raw material is discharged from the die 12 with a through hole.

For the screw 11, multiple types of screw pieces are combined and integrated into one bar of screw 11. For example, the screw 11 is configured by arranging and combining a flight screw-shaped forward flight piece that carries a resin raw material in a forward direction, a reverse flight piece that carries a resin raw material in a reverse direction, a kneading piece that kneads a resin raw material and the like, in an order and at positions according to the characteristics of the resin raw material.

The molding machine 1 is further provided with a motor 13 that outputs driving force for rotating the screw 11, the reduction gear 14 that reduces the transmission speed of the driving force from the motor 13 and a control device 15. The screw 11 is coupled to an output shaft of the reduction gear 14. The screw 11 is rotated by the driving force of the motor 13 that is reduced in transmission speed by the reduction gear 14.

### <Sensor 2>

A sensor 2 detects physical quantities related to the condition of a component constituting the molding machine 1, and directly or indirectly outputs the detected and obtained physical quantity data to the data collection device 3. The physical quantity data is data of time-series sensor values indicating the detected physical quantities. The sensor 2 includes sensors provided on the molding machine 1 as requisites for controlling the operation of the molding machine 1 and sensors provided for estimating the life of a component. A part of the multiple sensors 2 are connected to the data collection device 3, so that the data collection device 3 acquires physical quantity data from the sensors 2. Another part of the multiple sensors 2 are connected to the control device 15, so that the data collection device 3 acquires physical quantity data from the sensors 2 via the control device 15.

The physical quantities include temperature, position, velocity, acceleration, current, voltage, pressure, time, image data, torque, force, distortion, power consumption, weight and the like. These physical quantities can be measured with a thermometer, a position sensor, a speed sensor, an accelerometer, an ammeter, a voltmeter, a pressure gauge, a timer, a camera, a torque sensor, a wattmeter, a weightometer and the like.

The multiple sensors 2 include, for example, a first sensor 21 that detects a physical quantity related to the reduction gear 14, a second sensor 22 that detects a physical quantity related to the screws 11, a third sensor 23 that detects a physical quantity related to the motor 13 and a fourth sensor 24 that detects a physical quantity related to the die 12.

The first sensor 21 includes a vibration detector or the like that detects the vibration of the reduction gear 14, for example. The second sensor 22 includes a torque detector that detects a shaft torque of the screw 11, a tachometer that detects a rotational speed of the screw 11, a manometter that detects a screw tip pressure, a thermometer that detects a temperature of the screw 11 and a displacement sensor that detects a displacement of the rotation center of the screw 11. The third sensor 23 includes an ammeter that detects a current of the motor and a tachometer that detects a rotational speed of the motor. The fourth sensor 24 includes a manometer that detects a die head pressure acting on the die 12.

### <Control Device 15>

The control device 15 is a computer controlling the operation of the molding machine 1 and has a display unit and a transmission/reception unit (not illustrated) that transmits and receives information to and from the data collection device 3.

More specifically, the control device 15 transmits operating data indicating the operating state of the molding machine 1 to the data collection device 3. The operating data includes, for example, a motor current, a rotational speed of the screw 11, a tip pressure of the screw 11, a die head pressure, a feeder supply amount (supply amount of a resin raw material), an extrusion output, a cylinder temperature and a resin pressure.

The control device 15 receives various graph data that are transmitted from the data collection device 3 and estimation result data indicating a remaining life or an abnormality degree of a component constituting the molding machine 1. The control device 15 displays the contents of the received graph data and estimation result data. The control device 15 further outputs a warning depending on the remaining life or the degree of abnormality indicated by the received estimation result data.

### <Data Collection Device 3 >

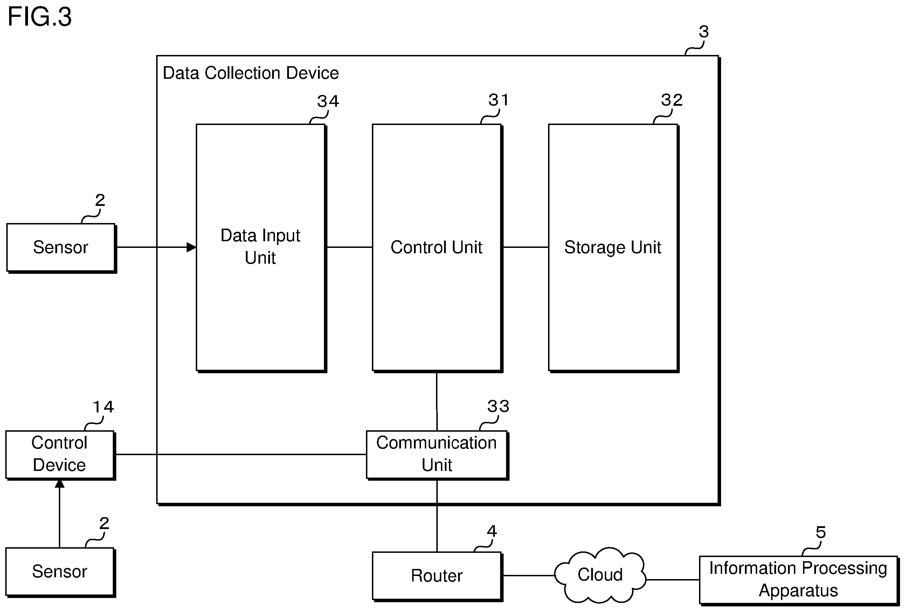

FIG. 3 is a block diagram depicting an example of the configuration of the data collection device 3 according to Embodiment 1. The data collection device 3 is a computer and is provided with a control unit 31, a storage unit 32, a communication unit 33 and a data input unit 34. The storage unit 32, the communication unit 33 and the data input unit 34 are connected to the control unit 31. The data collection device 3 is a Programmable Logic Controller (PLC), for example.

The control unit 31 includes an arithmetic processing circuit such as a CPU (Central Processing Unit), a multi-core CPU, an Application Specific Integrated Circuit (ASIC) or a Field-Programmable Gate Array (FPGA), an internal storage device such as a ROM (Read Only Memory) or a RAM (Random Access Memory), an I/O terminal and the like. The control unit 31 executes a control program stored in the storage unit 32, which will be described later, to perform processing of collecting physical quantity data and transmitting it to the information processing apparatus 5. Note that each functional part of the data collection device 3 may be realized in software, or some or all of the functional parts may be realized in hardware.

The storage unit 32 is a nonvolatile memory such as a hard disk, an EEPROM (Electrically Erasable Programmable ROM) or a flash memory. The storage unit 32 stores a control program for causing the computer to execute processing of collecting physical quantity data.

The communication unit 33 is a communication circuit that transmits and receives information according to a predetermined communication protocol such as the Ethernet (registered trademark). The communication unit 33 is connected to the control device 15 over a first communication network such as LAN or the like, so that the control unit 31 can transmit and receive various information to and from the control device 15 via the communication unit 33. The control unit 31 acquires physical quantity data via the communication unit 33.

The first network is connected to a router 4, and the communication unit 33 is connected via the router 4 to the information processing apparatus 5 in the cloud, which is a second communication network. The control unit 31 can transmit and receive various information to and from the information processing apparatus 5 via the communication unit 33 and the router 4.

The data input unit 34 is an input interface to which signals output from the sensors 2 are input. The data input unit 34 is connected to the sensors 2, so that the control unit 31 acquires physical quantity data via the data input unit 34.

### <Information Processing Apparatus 5>

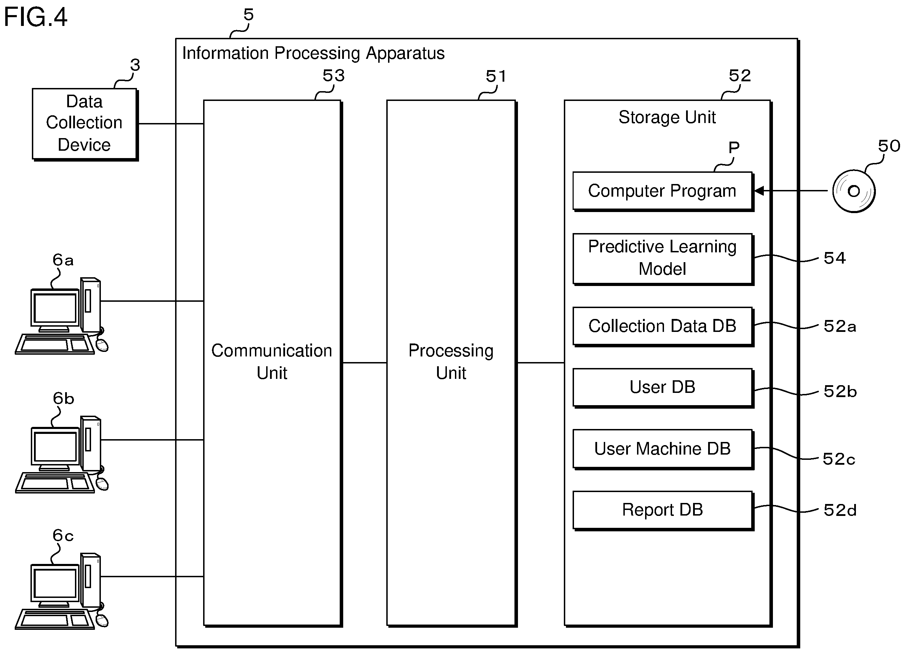

FIG. 4 is a block diagram depicting an example of the configuration of the information processing apparatus 5 according to Embodiment 1. The information processing apparatus 5 is a computer, and is provided with a processing unit 51, a storage unit 52 and a communication unit 53. The storage unit 52 and the communication unit 53 are connected to the processing unit 51.

The processing unit 51, which is a processor, includes an arithmetic processing circuit such as a CPU, a multi-core CPU, a GPU (Graphics Processing Unit), a General-Purpose Computing on Graphics Processing Units (GPGPU), a Tensor Processing Unit (TPU), an ASIC, an FPGA or a Neural Processing Unit (NPU), an internal storage such as a ROM or a RAM, and an I/O terminal. The processing unit 51 functions as the information processing apparatus 5 according to Embodiment 1 by executing a computer program P (computer program product) stored in the storage unit 52, which will be described later.

The information processing apparatus 5 according to Embodiment 1 functions as a machine condition offering web server that offers information on the condition of the molding machines 1 to the user and the sales representative. The information processing apparatus 5 also functions as a component information offering web server that offers information on components of the molding machines 1 to the user and the sales representative. The component information offering web server executes processing of accepting an order for a component, for example. Note that each functional part of the information processing apparatus 5 may be realized in software, or some or all of the functional parts thereof may be realized in hardware.

The communication unit 53 is a communication circuit that transmits and receives information according to a predetermined communication protocol such as the Ethernet (registered trademark). The communication unit 53 is connected to the data collection device 3 and the terminal devices 6a, 6b, 6c over the second communication network, so that the control unit 51 can transmit and receive various information to and from the data collection device 3 and the terminal devices 6a, 6b, 6c via the communication unit 53.

The storage unit 52 is a nonvolatile memory such as a hard disk, an EEPROM (Electrically Erasable Programmable ROM) or a flash memory. The storage unit 52 stores the computer program P to cause the computer to execute the processing of estimating the life of components constituting the molding machine 1, a predictive learning model 54, a collection data DB (database) 52a, a user DB (database) 52b, a user machine DB (database) 52c and a report DB (database) 52d.

The computer program P or the like may be recorded on a recording medium 50 so as to be readable by the computer. The storage unit 52 stores the computer program P or the like read from the recording medium 50 by a reader (not illustrated). The recording medium 50 is a semiconductor memory such as a flash memory. Furthermore, the recording medium 50 may be an optical disc such as a CD (Compact Disc)-ROM, a DVD (Digital Versatile Disc)-ROM, or a BD (Blu-ray (registered trademark) Disc). Moreover, the recording medium 50 may be a magnetic disk such as a flexible disk or a hard disk, or a magneto-optical disk. In addition, the computer program P or the like may be downloaded from an external server (not illustrated) connected to a communication network (not illustrated) and may be stored in the storage unit 52.

The predictive learning model 54 is an image recognition learning model that outputs data indicating a remaining life or an abnormality degree of a component constituting the molding machine 1 if image data generated from physical quantity data is input. The predictive learning model 54 has a CNN (Convolutional Neural Network), for example. The processing unit 51 transfer-trains or fine-tunes the existing trained model to generate a learning model specific for estimating the remaining life or the degree of abnormality of a specific molding machine 1 and a component.

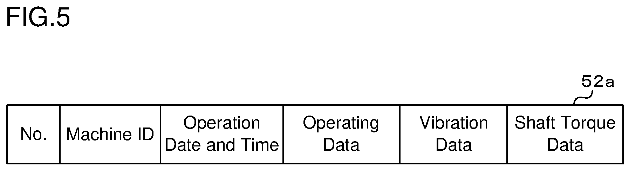

FIG. 5 is a conceptual diagram indicating an example of a record layout of the collection data DB 52a. The collection data DB 52a, which is provided with a hard disk and Database Management System (DBMS), stores various physical quantity data collected from the molding machine 1. For example, the collection data DB 52a has a "No." (record number) column, a "machine ID" column, an "operation date and time" column, an "operating data" column, a "vibration data" column and a "shaft torque data" column.

The "machine ID" column stores a machine identifier of the molding machine 1. The "operation date" column stores information indicating the year, month and date when various types of data stored as records were acquired. The "operating data" column stores time-series physical quantities indicating an operating state of the molding machine 1 such as motor current, a rotational speed of the screw 11, a tip end pressure of the screw 11, a die head pressure, a feeder supply amount (supply amount of resin row material), an extruder output, a cylinder temperature, a resin pressure and the like. The "vibration data" column stores vibration data as time-series physical quantity data. The "shaft torque data" column stores torque data of the screw 11 as time-series physical quantity data.

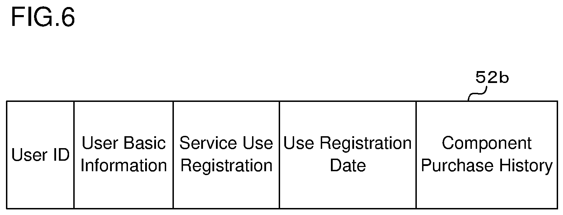

FIG. 6 is a conceptual diagram depicting an example of a record layout of the user DB 52b. The user DB 52b, which is provided with a hard disk and DBMS, stores basic information of the users and the like. The user DB 52b contains, for example, a "user ID" column, a "user basic information" column, a "service use registration" column, a "use registration date" column and a "component purchase history" column.

The "user ID" column stores an identifier of the user of the molding machine 1. The "user basic information" column stores basic information of the user, for example, information indicating whether or not company information such as the number of employees of a company as a user, a service plan and the like is to be used. The "service use registration" column stores use registration information indicating the presence or absence of the use of the maintenance and management service according to Embodiment 1.

The "use registration date" column stores a date when the maintenance management service according to Embodiment 1 was used and registered. The "component purchase history" column stores a purchase history for a component by the user. The purchase history, for example, stores the type of a purchased component, a purchase date, the number of purchased components and the like.

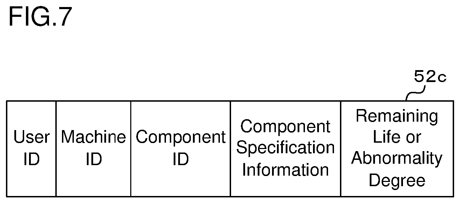

FIG. 7 is a conceptual diagram depicting an example of a record layout of the user machine DB 52c. The user machine DB 52c, which is provided with a hard disk and DBMS, stores information on components that constitute the molding machine 1 used by the user. The user machine DB 52c contains, for example, a "user ID" column, a "machine ID" column, a "component ID" column, a "component specification information" column and a "remaining life or abnormality degree" column.

The "user ID" column stores an identifier of the user of the molding machine 1. The "machine ID" column stores a machine identifier of the molding machine 1. The "component ID" column stores a component identifier of a component constituting the molding machine 1 for which a remaining life or an abnormality degree is to be predicted.

The "component specification information" column stores specification information on a product specification of the component corresponding to the component ID. For example, the specification information of the screw 11 and the reduction gear 14 that constitute the extruder is stored. The components that constitute the molding machine 1 are not necessarily mass-produced products, but are custom-made products manufactured for each user. The specification information includes information necessary for securing spare parts by manufacturing components, for example.

The "remaining life or abnormality degree" column stores a remaining life or an abnormality degree of the component corresponding to the component ID. The remaining life or the abnormality degree is predicted by the predictive learning model 54.

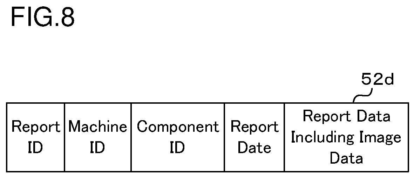

FIG. 8 is a conceptual diagram depicting an example of a record layout of the report DB 52d. The report DB 52d, which is provided with a hard disk and DBMS, stores information on components constituting the molding machine 1 used by the user. The report DB 52d, for example, contains an "report ID" column, a "machine ID" column, a "component ID" column, a "report date" column, a "report data" column and the like.

The "report ID" column stores an identifier for identifying report data on a maintenance result submitted by the user. The "machine ID" column and the "component ID" column respectively store a machine identifier and a component identifier for identifying the molding machine 1 and component for which the report is made.

The "report date" column stores year, month and date when the report data submitted by the user was received. The "report data" column stores the report data submitted by the user. The report data includes data on maintenance results of maintenance performed on the molding machine 1 or component. The report data includes image data obtained by imaging the molding machine 1 or the component.

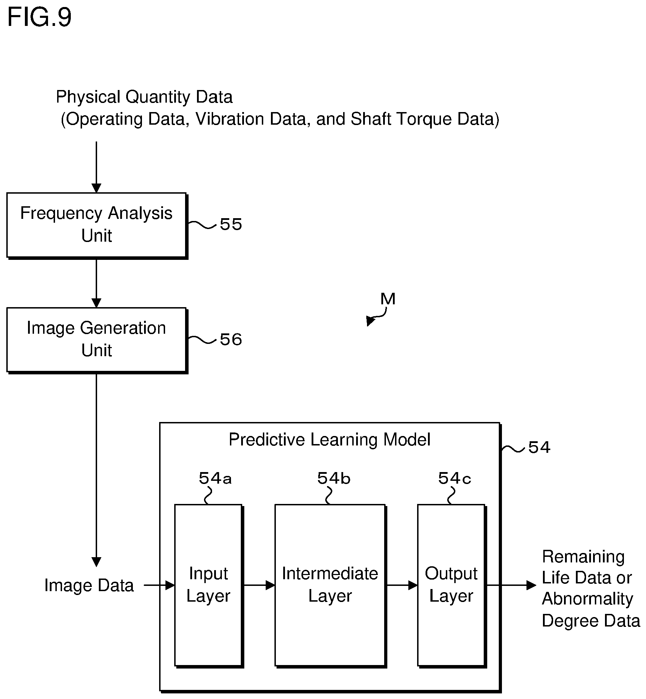

FIG. 9 is a block diagram depicting an estimation processing unit M for predicting a remaining life or an abnormality degree of a component. The estimation processing unit M includes the predictive learning model 54, a frequency analysis unit 55 and an image generation unit 56. Note that each functional part of the estimation processing unit M may be realized in software by the processing at the processing unit 51, or some or all of the functional parts thereof may be realized in hardware.

The frequency analysis unit 55 is an arithmetic processing unit that Fourier-transforms the time-series physical quantity data into physical quantity data of the frequency component. The frequency analysis unit 55 may Fourier-transform the physical quantity data by Short-Time Fourier Transform (STFT). The image generation unit 56 is an arithmetic processing unit that converts the Fourier-transformed physical quantity data into the image data representing the physical quantity data with an image. For example, the physical quantity data may be represented on an image plane with the frequency component on the horizontal axis and the magnitude of the frequency component on the vertical axis of the image. An image obtained by Fourier-transforming physical quantity data is called a Fourier transform image.

The method of frequency analysis may employ, not limited to STFT, Wavelet Transformation, Stockwell Transform, Wigner distribution function, Empirical Mode Decomposition, Hilbert-Huang Transform or the like.

The predictive learning model 54, which is a convolutional neural network (CNN), includes an input layer 54a to which image data of the Fourier transform image is input, an intermediate layer 54b and an output layer 54c that outputs remaining life data indicating a remaining life of the component or abnormality degree data indicating an abnormality degree of the component.

The input layer 54a has multiple nodes to which pixel values of the respective pixels constituting the Fourier transform image are input. The intermediate layer 54b is configured by alternately connecting convolutional layers for convolving the pixel values of the pixels of the Fourier transform image input to the input layer 54a and pooling layers for mapping the pixel values convolved in the convolutional layer. The intermediate layer 54b extracts the features of the Fourier transform image while compressing the image information of the Fourier transform image, and outputs the extracted Fourier transform image, i.e., the features of the physical quantity data to the output layer 54c.

The output layer 54c has nodes that output remaining life data indicating a remaining life or abnormality degree data indicating an abnormality degree of the component at the time when the physical quantity data is measured.

The predictive learning model 54 has been trained so as to output remaining life data indicating the remaining life equal to or longer than a predetermined time period at the latest necessary for securing a spare of the component of the molding machine 1. The predictive learning model 54 has further been trained so as to output an abnormality degree occurring before at least the predetermined time period.

A generation method of the predictive learning model 54 is as described below. First, the predictive learning model 54 to be tuned is prepared. For example, an image recognition model pre-trained using general image data as training data may be prepared.

The prepared predictive learning model 54 is then fine-tuned by being trained using known training data. For example, the molding machine 1 as an experimental machine is operated while mounted with a component whose remaining life or abnormality degree is known. The image data obtained by operating the experimental machine is attached with label data indicating the known remaining life or abnormality degree to create the known training data.

The remaining life to be attached when training data is created includes a remaining life equal to or longer than a predetermined time period required for securing a spare for the component of the molding machine 1. In the case where the predictive learning model 54 that outputs an abnormality degree is created, the abnormality degree to be attached when training data is created includes an abnormality degree occurring before at least the predetermined time period. In other words, training data is created using the image data obtained by operating the molding machine 1 provided with a component having a remaining life equal to or longer than the predetermined time period required to secure a spare for the component of the molding machine 1.

The prepared predictive learning model 54 is machine-trained using the above-mentioned known training data. More specifically, the processing unit 51 optimizes the weight coefficients of the predictive learning model 54 by the error backpropagation method, the error gradient descent method or the like with the training data to machine-train the predictive learning model 54. The processing unit 51 then stores the trained predictive learning model 54 in the storage unit 52 of the information processing apparatus 5.

Note that the processing unit 51 may create new training data based on the image data obtained during actual operation of the molding machine 1 and re-train the predictive learning model 54 using the created new training data at an appropriate timing. The processing unit 51 creates new training data by attaching the physical quantity data acquired from the molding machine 1 during operation with a correction label as teacher data and re-trains the predictive learning model 54.

While an example where the information processing apparatus 5 performs retraining was described here, another computer or server may be configured to retrain the predictive learning model 54 and transmit various parameters of the retrained predictive learning model 54 to the information processing apparatus 5.

Note that the predictive learning model 54 may employ CNN by way of example, but may also be constructed by Multilayer perceptron (MLP), Convolutional Neural Network (CNN), Graph Neural Network (GNN), Graph Convolutional Network (GCN), Recurrent Neural Network (RNN), Long Short Term Memory (LSTM) and other neural network models. The predictive learning model 54 may also be constructed by using an algorithm such as decision trees, random forests, Support Vector Machine (SVM) or the like.

### <Processing of Securing Spare Parts for Component>

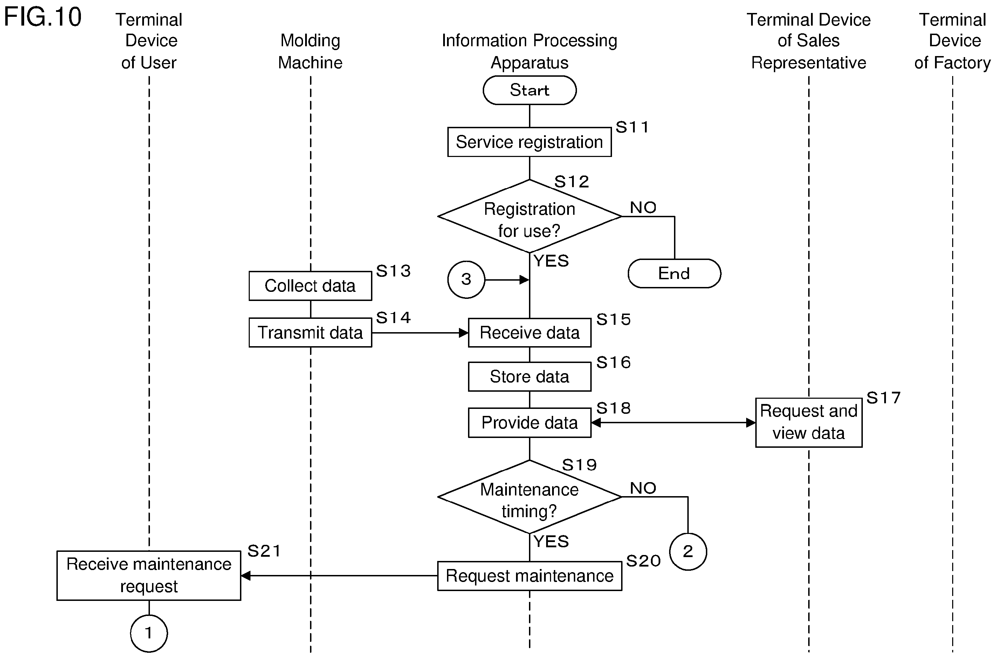

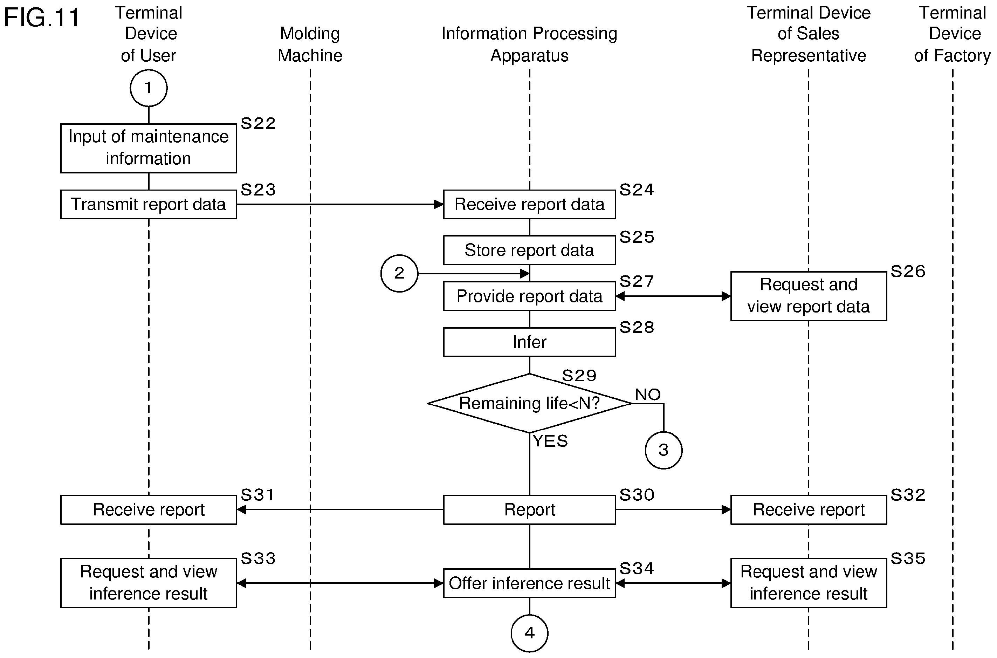

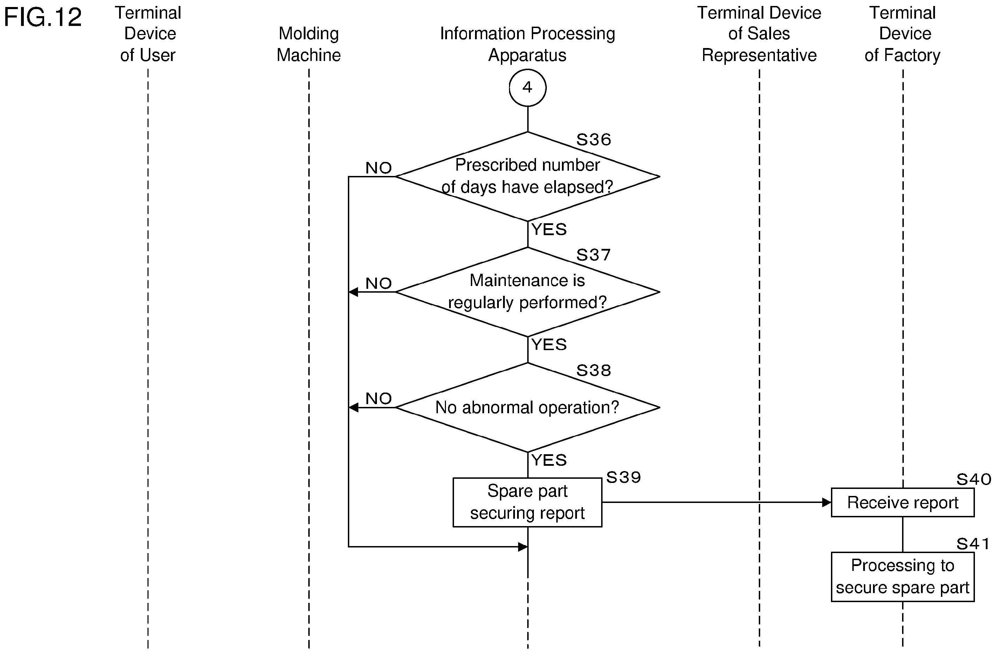

FIG. 10, FIG. 11 and FIG. 12 illustrate a flowchart depicting a processing procedure by the information processing apparatus 5. The processing unit 51 of the information processing apparatus 5 executes registration processing for the maintenance and management service according to Embodiment 1 (step S11).

The user can register for use of the maintenance and management service according to Embodiment 1 by using the terminal device 6a. Alternatively, in response to the user applying for use of the maintenance and management service to the sales representative, the sales representative can register for use of the maintenance and management service according to Embodiment 1 using the terminal device 6b. The terminal device 6a, 6b accepts the operation by the user or the sales representative and transmits various registration information necessary to start using the maintenance and management service. In the case where the processing unit 51 receives the registration information of the maintenance and management service through the terminal device 6a, 6b, it stores, in the user DB, use registration information indicating the use of the maintenance and management service in association with the user identifier.

The processing contents assumed to be performed by a specific user will be described below. The processing unit 51 of the information processing apparatus 5 determines whether or not registration for use of the maintenance and management service according to Embodiment 1 is present (step S12). If determining that no registration for use is present (step S12: NO), the processing unit 51 ends the processing.

Meanwhile, the data collection device 3 of the molding machine 1 collects physical quantity data related to the conditions of multiple components constituting the molding machine 1 (step S13) and transmits the collected physical quantity data to the information processing apparatus 5 (step S14). Note that multiple molding machines 1 and data collection devices 3 are provided, and the multiple data collection devices 3 transmit physical quantity data collected from the multiple molding machines 1 to the information processing apparatus 5.

If determining that the registration for use is present at step S12 (step S12: YES), the processing unit 51 receives the physical quantity data transmitted from the data collection device 3 (step S15). The processing unit 51 stores the received physical quantity data in the collection data DB 52a (step S16). Note that the processing unit 51, which executes the processing at step S15, functions as an acquisition unit that acquires physical quantity data.

The terminal device 6b of the sales representative requests the information processing apparatus 5 to provide data related to the operating status of the molding machine 1 of the user in response to an operation by the sales representative (step S17). The processing unit 51 of the information processing apparatus 5 transmits physical quantity data such as vibration data, shaft torque data and the like as well as the operating data or the like to the terminal device 6b in response to the request from the terminal device 6b (step S18). The terminal device 6b receives the data transmitted from the information processing apparatus 5 and displays the received data related to the operating status. The sales representative accesses a site provided by the information processing apparatus 5 to view the physical quantity data or the like related to the condition of the molding machine 1 and a component, and confirm the condition of the molding machine 1 and the component.

The processing unit 51 of the information processing apparatus 5 then determines whether or not a maintenance timing of the molding machine 1 has come (step S19). The setting method of the maintenance timing is not limited to a particular one. The maintenance timing is set to come at every predetermined time from the start of use of the molding machine 1, for example. The maintenance timing may vary depending on the operating status of the molding machine 1 and the operating environment, operating location and total operating time of the molding machine 1.

If determining that the maintenance timing of the molding machine 1 has not come (step S19: NO), the processing unit 51 executes the processing at and after step S 27, which will be described later. If determining that the maintenance timing has come (step S19: YES), the processing unit 51 transmits maintenance request data to request for maintenance of the molding machine 1 to the terminal device 6a of the user of the molding machine 1 (step S20).

The terminal device 6a receives the maintenance request data transmitted from the information processing apparatus 5 (step S21). The terminal device 6a having received the maintenance request data reports the maintenance timing of the molding machine 1, and displays information for inducing maintenance and accepts input of the maintenance information (step S22).

The user of the molding machine 1 performs maintenance of the molding machine 1 and takes an image of at least one of the molding machine 1 and a component. The user inputs a maintenance result and image data obtained by taking an image of the molding machine 1 or a component as maintenance information, to the terminal device 6a.

The terminal device 6a transmits report data containing the input maintenance information to the information processing apparatus 5 (step S23).

The information processing apparatus 5 receives the report data transmitted from the terminal device 6a (step S24), and the processing unit 51 stores the received report data in the report **DB** 52d (step S25).

The terminal device 6b of the sales representative requests the information processing apparatus 5 to provide the report data of the user according to the operation by the sales representative (step S26). The processing unit 51 of the information processing apparatus 5 reads the report data from the report **DB** 52d in response to the request from the terminal device 6b and transmits the data to the terminal device 6b (step S27). The terminal device 6b receives the report data transmitted from the information processing apparatus 5 and displays the received report data. The sales representative can view the report and confirm the maintenance status of the molding machine 1.

The processing unit 51 then estimates a remaining life or an abnormality degree of components constituting the molding machine 1 based on the physical quantity data accumulated in the collection data DB 52a (step S28). Specifically, the processing unit 51 performs frequency analysis on the physical quantity data to convert the data into image data and inputs the image data representing the physical quantity data to the predictive learning model 54 to thereby output the remaining life data or the abnormality degree data of the components. Note that the processing unit 51 calculates the remaining life or abnormality degree of each of the multiple components that constitute the multiple molding machines 1. In the case where physical quantity data related to the condition of the multiple components constituting one molding machine 1 is acquired, the processing unit 51 calculates the remaining life or the abnormality degree for each of the multiple components.

Next, the processing unit 51 determines whether or not the remaining life is shorter than the predetermined time N (step S29). The predetermined time N is desirably longer than at least the time required for at least manufacturing a component and securing it as a spare part. The predetermined time N varies depending on the type of the components.

Note that the processing unit 51 may be configured to determine whether or not the abnormality degree is less than a predetermined value corresponding to the above-mentioned predetermined time N.

If determining that the remaining life is equal to or longer than the predetermined time N (step S29: NO), the processing unit 51 returns the processing to step S15. If determining that the remaining life is shorter than the predetermined time N (step S29: YES), the processing unit 51 transmits report data indicating that the remaining life of a certain component is shorter than the predetermined time N, to the terminal device 6a of the user of the molding machine 1 provided with the component as well as the terminal device 6b of the sales representative (step S30).

The terminal device 6a of the user receives the report data transmitted from the information processing apparatus 5 (step S31). The terminal device 6a having received the report data displays the remaining life of the specific component being shorter than the predetermined time N. This enables the user to take an action necessary for replacement of the reported component. For example, the user accesses a site offered by the information processing apparatus 5 to view the information related to the component and take an action such as a request for estimate data to estimate a replacement cost of the component.

The terminal device 6b of the sales representative receives the report data transmitted from the information processing apparatus 5 (step S32). The terminal device 6b having received the report data displays the remaining life of the specific component being shorter than the predetermined time N. The sales representative can take an action necessary for maintenance of the reported component. For example, the sales representative can access the site provided by the information processing apparatus 5 to view information related to the component and take an action such as explaining to the user about the replacement of the component.

On the other hand, the terminal device 6a of the user requests the information processing apparatus 5 to provide an estimation result related to the remaining life of the component in response to an operation by the user (step S33). The information processing apparatus 5 transmits an estimation result of the remaining life of the component to the terminal device 6a in response to the request from the terminal device 6a (step S34). The terminal device 6a receives the estimation result transmitted from the information processing apparatus 5 and displays the received estimation result. The user can view the estimation result of the remaining life or the abnormality degree of the component.

Likewise, the terminal device 6b of the sales representative requests the information processing apparatus 5 to provide an estimation result related to the remaining life of the component in response to an operation by the sales representative (step S35). The information processing apparatus 5 transmits an estimation result of the remaining life of the component to the terminal device 6b in response to the request from the terminal device 6b (step S34). The terminal device 6b receives the estimation result transmitted from the information processing apparatus 5 and displays the received estimation result. The sales representative can view the estimation result of the remaining life or the abnormality degree of the component.

The processing unit 51 of the information processing apparatus 5 determines whether or not prescribed number of days have elapsed after the registration for use of the maintenance and management service (step S36). After the prescribed number of days have elapsed from the date of the registration for the maintenance and management service, the user can receive the service to secure spare parts for the component in advance. If the prescribed number of days have not elapsed, such as immediately after the registration for use, for example, the user cannot receive the service related to securing spare parts for the component.

If determining that the prescribed number of days have elapsed (step S36: YES), the processing unit 51 determines whether or not maintenance is regularly performed with reference to the report DB 52d (step S37).

If determining that maintenance is regularly performed (step S37: YES), the processing unit 51 determines whether or not an abnormal operation or the like is present with reference to the collection DB (step S38).

If determining that abnormal operation is not present (step S38: YES), the processing unit 51 transmits spare part securing report data to request securing of a spear part for the component whose remaining life is shorter than the predetermined time N to the terminal device 6c of the factory (step S39). The processing of transmitting the spare part securing report data to the terminal device 6c of the factory is processing related to securing a spare part for the component that needs to be replaced.

If determining that the prescribed number of days have not elapsed (step S36: NO), determining that the maintenance of the molding machine 1 is not regularly performed (step S37: NO), or determining that abnormal operation is present (step S38: NO), in the processing through steps S36 to S38, the processing unit 51 does not execute the processing related to securing of a spare part for the component.

Note that the steps S36 to S38 are examples of the conditions for receiving a service to secure spare parts for the component in advance, and a part of the processing may be executed to determine the presence or absence of the service provision condition.

The terminal device 6c of the factory receives the spare part securing report data (step S40). The terminal device 6c having received the spare part securing report data executes processing related to securing of a spare part (step S41). If there are components in stock, the terminal device 6c secures the component in stock as a spare part to be replaced with the reported component of the molding machine 1. If a component stock database is present, the terminal device 6c makes the component in stock as a spare by changing the records in the stock database. If there are no components in stock, processing of requesting for manufacture of the components is executed.

Though an example where the spare part securing report data is transmitted to the terminal device 6c of the factory was described, the processing unit 51 may be configured to transmit the spare part securing report data to the terminal device 6b of the sales representative. The sales representative asks a factory to secure a spare part for the component.

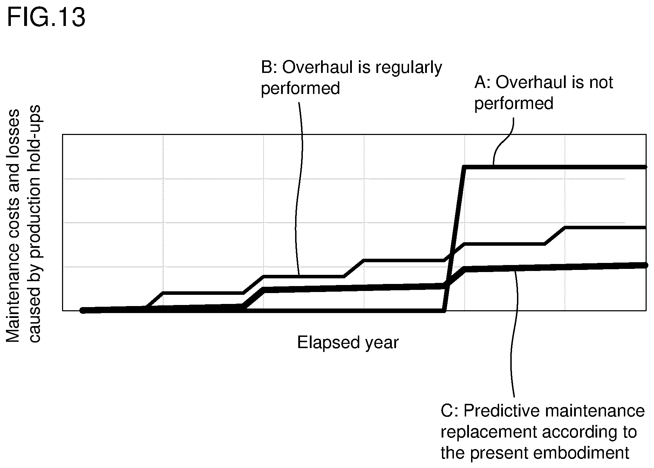

FIG. 13 is a graph depicting cost-effectiveness of maintenance management according to Embodiment 1. The horizontal axis of the graph depicted in FIG. 13 indicates the elapsed years from the start of the use of the molding machine 1, while the vertical axis indicates the total amount of maintenance costs of the molding machine 1 and losses caused by production hold-ups of the molding machine 1. The total amount will be referred to as a cost of maintenance and the like.

In FIG. 13, the graph A depicts the cost of maintenance and the like in the case where maintenance such as an overhaul is not performed. The graph B depicts the cost of maintenance and the like in the case where an overhaul is regularly performed. The graph C depicts the cost of maintenance and the like in the case where the maintenance according to Embodiment 1 is performed.

In the case where an overhaul is not performed, damage to a component constituting the molding machine 1 is unavoidable. In the example in FIG. 13, although cost for regular maintenance does not occur, the largest loss occurs in the end due to damage to the component. In the case where the component is a component that requires time to be manufactured as in the reduction gear 14, significant losses occur due to operational downtime of the molding machine 1.

In the case where an overhaul is regularly performed, no significant loss occurs due to operational downtime of the molding machine 1, but the cost of regular overhauls piles up, and the cost of maintenance here is greater than the cost of maintenance or the like according to the present embodiment. It can be said that maintenance cost piles up due to excessive maintenance management.

Though the maintenance management method and the like according to Embodiment 1 entails ongoing maintenance costs, such as monthly or the like, a spare part can be prepared by predicting the replacement timing of the components, which eliminates the need for maintenance by an overhaul and prevents the risk of operational downtime of the molding machine 1.

As described above, according to the information processing method and the like according to Embodiment 1, before a component constituting the molding machine 1 is made inoperable due to being damaged, the remaining life or the abnormality degree of the component can be estimated, and spare parts for the component can be prepared in advance. This makes it possible to reduce the cost of maintenance or the like of the molding machine 1 compared to the maintenance management by regular overhauls. In other words, the molding machine 1 can be kept in good condition while avoiding losses caused by operational downtime of the molding machine 1 and costs due to the production of a spare part for the component in unappropriated timing.

Furthermore, specification information is transmitted to the terminal device 6b of the sales representative and the terminal device 6c of the factory, which enables immediate start of manufacturing a component, which is a custom-made product, that constitutes the molding machine 1 of the user.

Moreover, encouraging the user to perform maintenance of the molding machine 1 and to manage the maintenance status enables the molding machine 1 to be kept in better condition and reduces the risk of operational downtime of the molding machine 1.

In addition, in the case where maintenance is appropriately performed, securing spare parts for a component induces the maintenance of the molding machine 1 more effectively.

### Embodiment 2

The information processing apparatus 5 according to Embodiment 2 is different from that of Embodiment 1 in that the remaining life or abnormality degree of a component is calculated by using the image data contained in the report data as well. Since the other configurations of the information processing apparatus 5 are similar to those of the information processing apparatus 5 in Embodiment 1, corresponding parts are designated by similar reference codes and detailed description thereof will not be repeated.

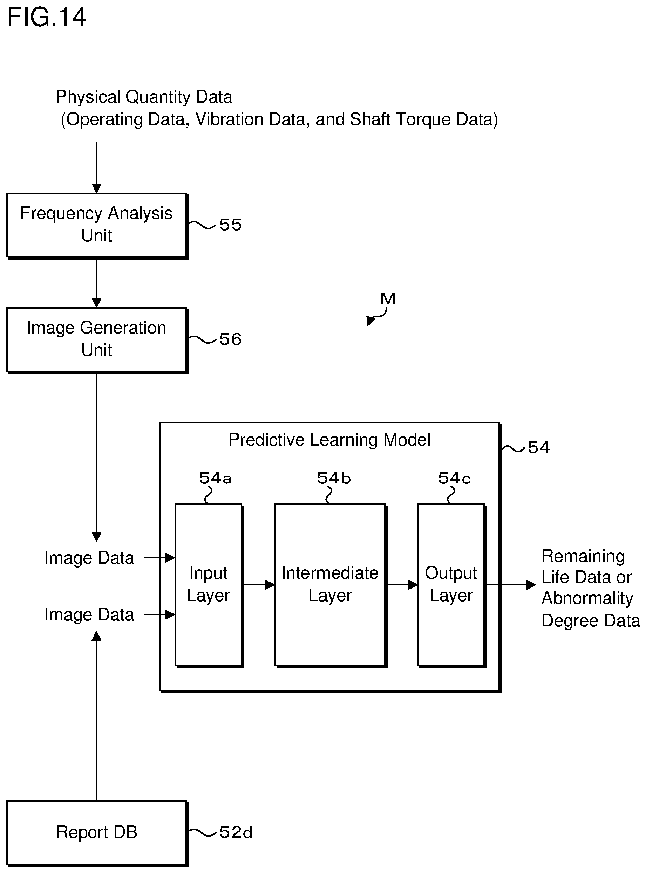

FIG. 14 is a block diagram depicting an estimation processing unit M according to Embodiment 2. The estimation processing unit M includes the predictive learning model 54, the frequency analysis unit 55 and the image generation unit 56 as in Embodiment 1.

The predictive learning model 54, which is a convolutional neural network, includes an input layer 54a to which image data of the Fourier transform image and image data contained in report data related to a component for which the remaining life is to be predicted are input, an intermediate layer 54b and an output layer 54c that outputs remaining life data indicating the remaining life of the component or abnormality degree data indicating an abnormality degree of the component. The image data contained in the report data is hereinafter referred to as report image data.

The input layer 54a has multiple nodes to which pixel values of the respective pixels constituting the Fourier transform image and pixel values of the respective pixels constituting the report image data are input. The intermediate layer 54b is configured by alternately connecting convolutional layers for convolving pixel values of the pixels of the Fourier transform image and the image of the report image data input to the input layer 54a and pooling layers for mapping the pixel values convolved in the convolutional layer. The intermediate layer 54b extracts the features of the Fourier transform image while compressing the image information of the Fourier transform image and the report image data, and outputs the features to the output layer 54c.

The output layer 54c has nodes that output remaining life data indicating a remaining life or abnormality degree data indicating an abnormality degree of the component at the time when the physical quantity data is measured.

The processing unit 51 of the information processing apparatus 5 then estimates a remaining life or an abnormality degree of the components constituting the molding machine 1 based on the physical quantity data accumulated in the collection data **DB** 52a and the image data contained in the report data stored in the report **DB** 52d in the processing at step S28. More specifically, the processing unit 51 frequency-analyzes physical quantity data to convert it to image data. The processing unit 51 further reads report data related to a component for which the remaining life is to be predicted and extracts image data contained in the read report data. The processing unit 51 inputs the image data representing the physical quantity data and the image data extracted from the report data to the predictive learning model 54 to output the remaining life data or the abnormality degree data of the component.

According to the information processing method and the like according to Embodiment 2 as described above, the remaining life and the abnormality degree of a component constituting the molding machine 1 can be estimated with high accuracy, which enables preparation of a spare part for the component at a more appropriate timing.

### Embodiment 3

The information processing apparatus 5 according to Embodiment 3 is different from Embodiment 1 or 2 in that it can manage the situation of offering a substitute to the user when securing a component constituting the molding machine 1 is not performed in time. Since the other configurations of the information processing apparatus 5 are similar to those of the information processing apparatus 5 according to Embodiment 1 or 2, corresponding parts are designated by similar reference codes and detailed description thereof will not be repeated.

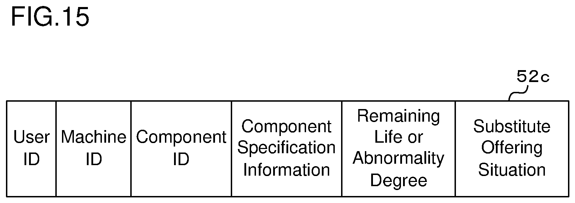

FIG. 15 is a conceptual diagram depicting an example of a record layout of the user machine DB 52c according to Embodiment 3. The user machine DB 52c according to Embodiment 3 contains, for example, a "substitute offering situation" column as well as the "user ID" column, the "machine ID" column, the "component ID" column, the "component specification information" column and the "remaining life or abnormality degree" column. The "substitute offering situation" column stores information indicating the situation of offering a substitute to the user when securing a component constituting the molding machine 1 is not performed in time. The "substitute offering situation" column stores, for example, information on the specification of a substitute, a date when the substitute was offered, an expiration date of the substitute (the service life of the substitute) and the like.

The sales representative, having offered the substitute, inputs information for specifying the molding machine 1 and the component and information on the substitute offering situation to the terminal device 6b. The information for specifying the molding machine 1 and the component corresponds to, for example, a machine identifier and a component identifier indicating a specific molding machine 1 and a component.

The terminal device 6b transmits the information indicating the machine identifier, the component identifier and the substitute offering situation to the information processing apparatus 5. The information processing apparatus 5 receives the information indicating the component identifier and the substitute offering situation and stores the information in the user machine DB 52c.

If receiving a request for the information on the substitute offering situation from the terminal device 6b operated by the sales representative, the information processing apparatus 5 reads the information on the substitute offering situation from the user machine DB 52c and transmits it to the terminal device 6b of the sales representative.

In the case where the expiration date of the substitute approaches, the information processing apparatus 5 may be configured to report to the terminal device 6b of the sales representative that the expiration date of the substitute is approaching.

According to the information processing method and the like according to Embodiment 3 as described above, the situation of providing the user with a substitute when securing a component constituting the molding machine 1 is not performed in time can be managed.

The means for solving the present disclosure is further described.

### Clause 1

An information processing method, comprising:
storing, in a storage unit, use registration information indicating whether or not to use a maintenance and management service for securing in advance a spare part of a component constituting a molding machine before the component is damaged, in association with an identifier of a user of the molding machine;
acquiring physical quantity data related to a condition of the component constituting the molding machine;
estimating a remaining life or an abnormality degree of the component based on the acquired physical quantity data;
determining whether or not a spare part for the component needs to be secured before a predetermined time period required for securing a spare part of the component at the latest based on the estimated remaining life or abnormality degree of the component; and
executing, in a case where it is determined that a spare part for the component needs to be secured, processing of securing a spare part of the component that needs to be replaced according to the use registration information stored in the storage unit.

### Clause 2

The information processing method according to clause 1, further comprising:
reading specification information of the component that needs to be replaced from a database storing a plurality of users and specification information of the component constituting each of a plurality of the molding machines used by the plurality of users in association with each other; and
executing processing related to securing of a spare part of the component that needs to be replaced based on the read specification information.

### Clause 3

The information processing method according to clause 1 or 2, further comprising:
reporting performance of maintenance to the user;
acquiring report data indicating a maintenance result of the molding machine from the user; and
storing the acquired report data in the storage unit.

### Clause 4

The information processing method according to clause 3, further comprising executing processing related to securing a spare part for the component that needs to be replaced in the case where the storage unit stores the report data.

### Clause 5

The information processing method according to clause 3 or 4, wherein
the report data includes image data acquired by taking an image of the molding machine or the component;
the information processing method further comprising estimating a remaining life or an abnormality degree of the component based on the physical quantity data and the image data included in the report data.

### Clause 6

The information processing method according to any one of clause 1 to 5, further comprising storing information indicating that a substitute for the component is offered to the user in the storage unit.

### Clause 7

An information processing apparatus, comprising:
an acquisition unit that acquires physical quantity data related to a condition of a component constituting a molding machine; and
a storage unit that stores use registration information indicating whether or not to use a maintenance and management service for securing in advance a spare part for a component constituting the molding machine before the component is damaged, in association with an identifier of a user of the molding machine; and
a processing unit,
the processing unit
estimating a remaining life or an abnormality degree of the component based on the acquired physical quantity data;
determining whether or not a spare part for the component needs to be secured before a predetermined time period required for securing a spare part of the component at the latest based on the estimated remaining life or abnormality degree of the component; and
executing, in a case where it is determined that a spare part for the component needs to be secured, processing of securing a spare part of the component that needs to be replaced according to the use registration information stored in the storage unit.

### Clause 8

A computer program causing a computer to execute processing of:
storing, in a storage unit, use registration information indicating whether or not to use a maintenance and management service for securing in advance a spare part of a component constituting a molding machine before the component is damaged, in association with an identifier of a user of the molding machine;
acquiring physical quantity data related to a condition of the component constituting the molding machine;
estimating a remaining life or an abnormality degree of the component based on the acquired physical quantity data;
determining whether or not a spare part for the component needs to be secured before a predetermined time period required for securing a spare part of the component at the latest based on the estimated remaining life or abnormality degree of the component; and
executing, in a case where it is determined that a spare part for the component needs to be secured, processing of securing a spare part of the component that needs to be replaced according to the use registration information stored in the storage unit.

- 1: molding machine
- 2: sensor
- 3: data collection device
- 4: router
- 5: information processing apparatus
- 6a: terminal device of user
- 6b: terminal device of sales representative
- 6c: terminal device of factory
- 10: cylinder
- 10a: hopper
- 11: screw
- 12: die
- 13: motor
- 14: reduction gear
- 15: control device
- 21: first sensor
- 22: second sensor
- 23: third sensor
- 24: fourth sensor
- 31: control unit
- 32: storage unit
- 33: communication unit
- 34: data input unit
- 50: recording medium
- 51: processing unit
- 52: storage unit
- 53: communication unit
- 54: predictive learning model
- 74a: input layer
- 74b: intermediate layer
- 74c: output layer
- 55: frequency analysis unit
- 56: image generation unit
- 52a: collected DB
- 52b: user DB
- 52c: user machine DB
- 52d: report DB
- P: computer program

## Claims

1. An information processing method, comprising:
storing, in a storage unit, use registration information indicating whether or not to use a maintenance and management service for securing in advance a spare part of a component constituting a molding machine before the component is damaged, in association with an identifier of a user of the molding machine;
acquiring physical quantity data related to a condition of the component constituting the molding machine;
estimating a remaining life or an abnormality degree of the component based on the acquired physical quantity data;
determining whether or not a spare part for the component needs to be secured before a predetermined time period required for securing a spare part of the component at the latest based on the estimated remaining life or abnormality degree of the component; and
executing, in a case where it is determined that a spare part for the component needs to be secured, processing of securing a spare part of the component that needs to be replaced according to the use registration information stored in the storage unit.

2. The information processing method according to claim 1, further comprising:
reading specification information of the component that needs to be replaced from a database storing a plurality of users and specification information of the component constituting each of a plurality of the molding machines used by the plurality of users in association with each other; and
executing processing related to securing of a spare part of the component that needs to be replaced based on the read specification information.

3. The information processing method according to claim 1 or 2, further comprising:
reporting performance of maintenance to the user;
acquiring report data indicating a maintenance result of the molding machine from the user; and
storing the acquired report data in the storage unit.

4. The information processing method according to claim 3, further comprising executing processing related to securing a spare part for the component that needs to be replaced in the case where the storage unit stores the report data.

5. The information processing method according to claim 3 or 4, wherein
the report data includes image data acquired by taking an image of the molding machine or the component;
the information processing method further comprising estimating a remaining life or an abnormality degree of the component based on the physical quantity data and the image data included in the report data.

6. The information processing method according to any one of claims 1 to 5, further comprising storing information indicating that a substitute for the component is offered to the user in the storage unit.

7. An information processing apparatus, comprising:
an acquisition unit that acquires physical quantity data related to a condition of a component constituting a molding machine; and
a storage unit that stores use registration information indicating whether or not to use a maintenance and management service for securing in advance a spare part for the component constituting the molding machine before the component is damaged, in association with an identifier of a user of the molding machine; and
a processing unit,
the processing unit
estimating a remaining life or an abnormality degree of the component based on the acquired physical quantity data;
determining whether or not a spare part for the component needs to be secured before a predetermined time period required for securing a spare part of the component at the latest based on the estimated remaining life or abnormality degree of the component; and
executing, in a case where it is determined that a spare part for the component needs to be secured, processing of securing a spare part of the component that needs to be replaced according to the use registration information stored in the storage unit.

8. A computer program causing a computer to execute processing of:
storing, in a storage unit, use registration information indicating whether or not to use a maintenance and management service for securing in advance a spare part of a component constituting a molding machine before the component is damaged, in association with an identifier of a user of the molding machine;
acquiring physical quantity data related to a condition of the component constituting the molding machine;
estimating a remaining life or an abnormality degree of the component based on the acquired physical quantity data;
determining whether or not a spare part for the component needs to be secured before a predetermined time period required for securing a spare part of the component at the latest based on the estimated remaining life or abnormality degree of the component; and
executing, in a case where it is determined that a spare part for the component needs to be secured, processing of securing a spare part of the component that needs to be replaced according to the use registration information stored in the storage unit.
